# EUROPEAN PATENT SPECIFICATION

(11) **EP 1 958 510 B1**
(45) Date of publication and mention of the grant of the patent: **04.04.2018**
(21) Application number: 08151371.5
(22) Date of filing: 13.02.2008
(51) Int. Cl.: A21C 7/01

(54) **Improved Dough Moulder**
Verbesserte Teigformmaschine
Façonneuse à pâte améliorée

(30) Priority: 14.02.2007 AU 2007900715
(43) Date of publication of application: 20.08.2008
(73) Proprietor: Moffat Pty Limited, Mulgrave, Victoria 3170 (AU)
(72) Inventor: Willett, Paul Eaton, Whiteside, Queensland 4503 (AU)
(74) Representative: Cozens, Paul Dennis

(56) References cited:
- FR-A1- 2 523 811
- US-B2- 7 128 555

## Description

### Field of the invention

This invention relates to a dough moulder, for example a dough moulder which is suitable for moulding dough of different volumes or weight to suit a range of bread and/or breadstick sizes.

### Background of the invention

With the recent introduction of bakery set up in commercial shopping outlets or the bakery departments in supermarkets, a premium is placed on working space and flexibility of product production. As many of the products are produced in relatively small runs, the economics of a bakery of this type is generally improved if as many types of product can be produced from as few dough types as possible and the number of pieces of equipment used to produce the different products can be minimised.

Bread moulders are conventionally used to receive a piece of pre-weighted dough and mould to a desired shape for a specific bakery product before it is proved and baked.

In an effort to diversify product lines from single dough sources, it is often desirable to use the same dough for loaf production as roll production. For roll production this involves moulding the dough, dividing the dough into appropriately sized portions and then shaping the dough into final product form prior to baking. Round bread rolls are commonly produced by dividing off a portion of dough, rounding it into a rough ball and compressing the ball into a flattish circular shape. The flattened ball of dough is then compressed under a plate where the round disc is cut into similar sized portions. The disc then orbits for a predetermined period of time and each roll portion of dough is rounded up into a ball. The balls are then placed on baking trays where they are given a final proof and then baked. While there are several other methods of producing round rolls, all generally require the round roll to be made from a larger dough portion. This larger dough portion generally comes directly from the mixing machine.

It is well known that dough that is first sheeted out and flattened before further refining creates a better texture because the sheeting process aligns the cells in the dough. Such sheeting is difficult in round roll production as the sheeting process can overwork the dough making it difficult to hold its round shape during baking.

US7128555B2 discloses a dough moulder for producing moulded dough products of a desired size and/or shape. The moulder includes guides plate which are selectively insertable through respective pairs of slots formed in a pressure rolling board. The guide plates extend through the pressure rolling board to define a channel of selectable width depending on which pair of slots is selected. The variable width channel enables dough products of a desired size and/or shape to be rolled.

FR2523811A1 discloses apparatus which comprises a horizontal conveyor band which carries a ball of dough beneath a forming plate. The forming plate converges towards the band surface in the direction of band movement, thus squeezing and rolling each dough ball into an elongated cylinder. A set of blades, which are longitudinal with respect to the conveyor and equally spaced across the width of the conveyor, are fixed to project below the underside of the forming plate. Each blade has a lower edge of which an upstream section has a flat edge which slopes towards the band more sharply than the forming plate. The upstream edge is followed by a downstream cutting edge which is parallel or converges only slightly to the band. The machine is for cutting to length and forming pieces of dough particularly for the manufacture of bread rolls. The combined cutting and forming action of the machine automatically produces dough rolls with fully-finished ends requiring no further manual attention.

### Summary of the invention

In one aspect, the invention provides a pressure rolling board for use in a dough or bread moulder of the type including a dough conveyor operable to receive a strip of dough, the dough conveyor having a first run for cooperating with a curling element to curl or roll the dough strip into a dough piece and a second run operable with a pressure rolling board to mould the dough piece, the pressure board comprising: an upper section and a lower section, the lower section including a plurality of formed troughs or channels, and blade slots between each of the formed channels or troughs; a plurality of longitudinally extending grid slots adapted to receive grid plates to define a confinement region for containing the dough piece, the blade slots being positioned along an upper edge of a wall of each channel or trough and being adapted to receive blades which subdivide the confinement region between the guide plates to cut and divide the dough passing through the confinement region; wherein a floor of each channel or trough progressively diverges from the plane of the pressure rolling board and is provided with shaped edges or bevels to round the edges of the individual dough piece as it passes along the channel or trough. The bread moulder is preferably of the type described in US patent no 7,128,555 in the name of Willet. The invention also provides a dough moulder comprising a pressure rolling board as aforesaid, and said dough conveyor, said dough conveyor being operable to receive a strip of dough, the conveyor having a first run operable to co-operate with a curling element to curl or roll the dough strip into a dough piece and a second run operable with the pressure rolling board to mould the dough piece.

There is also described a dough moulder including a dough conveyor operable to receive a strip of dough, the conveyor having a first run operable to co-operate with a curling element to curl or roll the dough strip into a dough piece and a second run operable with a pressure rolling board to mould the dough piece, wherein the pressure rolling board has an upper section and a lower section, the lower section including a plurality of formed channels or troughs.

The pressure board may be provided with a plurality of longitudinally extending grid slots adapted to receive grid plates. During its progress through the bread moulder, the dough which is rolled between the second run and the pressure board elongates and is contained within a confinement region defined by the grid slots and grid plates.

The lower section of the pressure board may further be provided with blade slots between each of the formed channels or troughs. The blade slots which are preferably along the upper edge of the wall of each channel or trough are adapted to receive blades which subdivide the containment region between the guide plates at the lower section of the pressure board. The blades perform the function of cutting and dividing the dough passing through the lower section of the containment regions. The dough divided by the blades passes along the individual channels.

As the dough is in compression under the action of the pressure board, the divided dough piece is able to expand to maintain contact with the second run of the conveyor.

The floor of each channel or trough progressively diverges from the plane of the pressure board and is provided with shaped edges or bevels to round the edges of the individual dough piece as it passes along the channel or trough.

It is preferable that these bevels and floor of the channel or trough are shaped so that the cross sectional area of the divided space between the pressure board and the second run of the conveyor remains substantially unchanged. Alternatively, the shaping provided by the bevels provides a substantially constant cross sectional area across the diameter of the dough piece as it progressed down the channel.

The upper edge of the wall of each channel or trough preferably is in the same plane as the upper section of the pressure board. Thus if the blade are not inserted into the slots the dough is able to roll past the lower section of the pressure board along the upper edges of the wall without being affected by the channels in the lower section of the pressure board.

In one preferred form of the invention, the lower section of the pressure board may be hinged to enable the channels to be raised when the blades are inserted in the blade slots. This enables pressure to be applied to the dough pieces when in the channels.

Features in one aspect of the invention may be applied to other aspects of the invention, in any appropriate combination. In particular, method aspects may be applied to apparatus aspects, and vice versa.

### Brief description of the drawings

Preferred features of the present invention will now be described, purely by way of example, with reference to the accompanying drawings, in which:
Figure 1 is a side elevational and plan view of a flattened dough piece;
Figure 2 is a side elevational and plan view of a dough piece of a double weighted portion of dough sheeted out and divided in two;
Figure 3 is a schematic diagram of a typical long loaf or roll moulding machine showing the dough piece being fed lengthwise into the rollers;
Figure 4 is the long loaf or roll moulding machine of Figure 3 showing the dough piece being fed sideways into the machine;
Figure 5 is a side elevational view of a dough moulding machine having a pressure board in accordance with the present invention.
Figures 6-8 are an end view of the second run of the conveyor and pressure board taken from position C on Figure 5 showing different arrangements of guides and blades;
Figure 9 is a schematic diagram of the pressure board in accordance with the invention;
Figure 9A is a view of a portion of the pressure board shown in Figure 9;
Figure 10 is an illustration of a blade used in the lower section of the pressure board in accordance with the invention;
Figure 11 is an illustration of the dough pieces contained by guide 10 when the blades are not engaged, passing over the top of the channels;
Figure 12 is a second embodiment of the pressure board according to the invention showing a hinge for the lower region of the pressure board to enable the lower region to be raised and lowered;
Figure 13 is an illustration of a roll portion which results from dough being fed into a roll divider in accordance with an embodiment of the invention sideways;
Figure 14 is an enlarged view of a dough portion;
Figure 15 is a cross section view of a dough portion taken along the line A-A illustrated in Figure 14;
Figure 16 illustrates round roll portions batch packs on a baking tray;
Figure 17 is an illustration of the roll shaped portions reduced by dough being fed lengthwise into the dough moulder in accordance with an embodiment of the invention; and
Figure 18 is a cross section view of the roll shaped portion of Figure 17.

### Detailed description of the embodiments

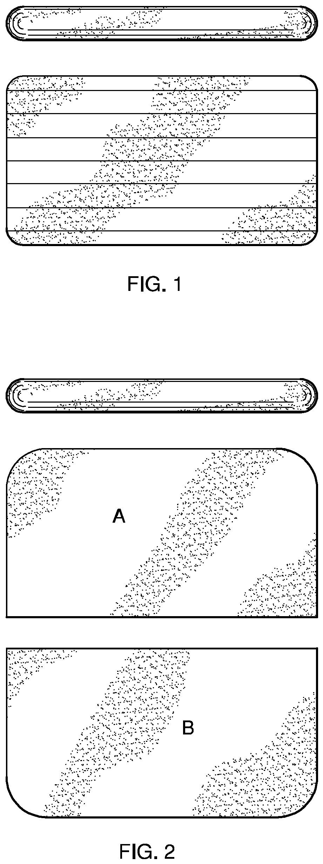

Figure 1 illustrates a preformed dough piece that is about 200 x 110 x 22mm. This is the ideal but not critical size and shape of a preformed dough piece and weighs about 400 to 500 grams. This dough piece may be fresh dough or thawed frozen dough. The direction lines, indicate the direction in which the dough piece texture has been formed during industrial production. The following method of producing rolls relies on the dough piece being presented to the machines rollers either forwards or crosswise, and although such lines are not visible in the dough piece, they indicate for clarity purposes whether the long or short side is being presented to the rollers.

Figure 2 illustrates one of the many options available for the industrial manufacture of a suitable shaped and sized piece. This option permits a double weight portion to be sheeted out into a flat oval shape, then it is cut in half, to obtain two perfectly acceptable shaped pieces of similar dimension to the dough piece of figure 1.

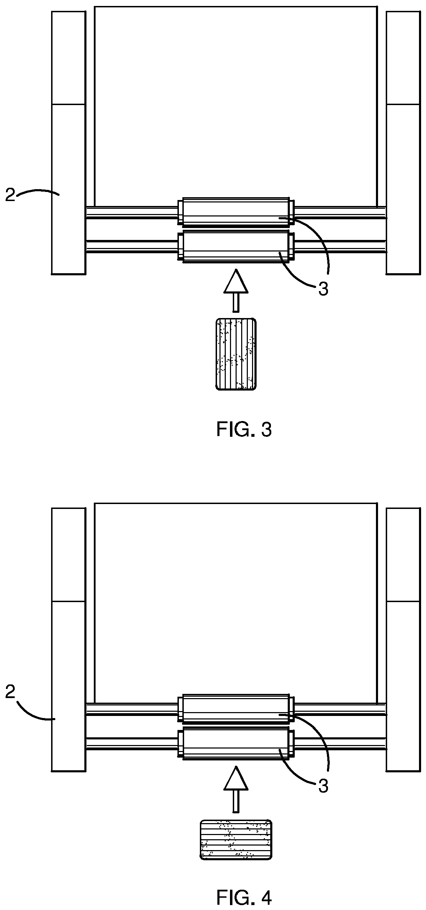

Figure 3 illustrates a typical long loaf or roll moulding machine [2] having one or more sets of sheeting rollers [3]. The illustrated dough piece is about 200 x 110mm. Due to the alignment in the cells in the dough during sheeting, by feeding the dough piece into the rollers [3] lengthwise a different final shaped dough piece will emerge from the final shaping process. Feeding the dough piece this way permits more laminations in the final shape, and the dough is generally narrower, but larger in diameter when curled back up.

Figure 4 illustrates a dough piece similar to the dough piece of figure 3 being fed in sideways, where the number of laminations are less, but the dough piece is longer when curled up. This also creates a less worked dough piece, particularly if the sheeting rollers [3] are set at a wider gap.

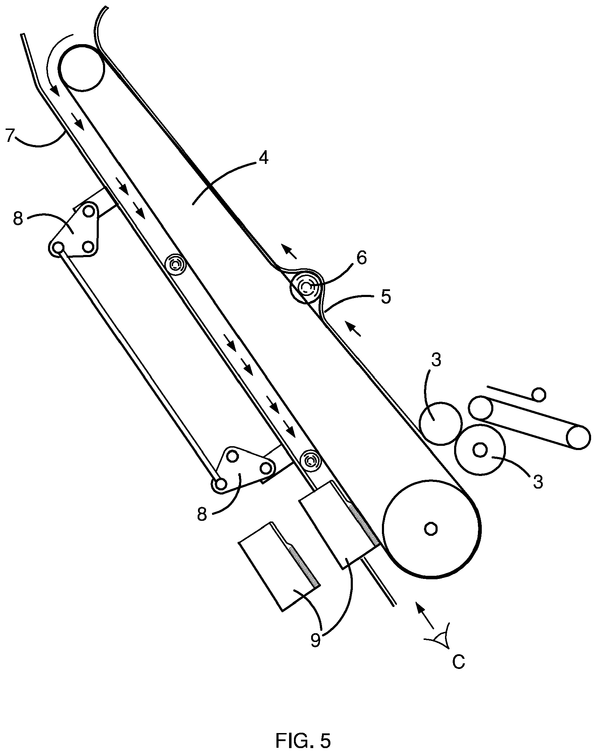

Figure 5 illustrates a sectional side view of a long loaf or roll moulding machine with a pressure board according to the invention. The machine is similar to that shown in US 7,128,555 with the inclusion of an improved pressure board. The moulding machine includes sheeting rollers [3], with a conveyor [4], beneath them. A curling chain [5] causes the flattened dough to curl up into a roughly coiled ball [6]. As the dough leaves the curling chain [5], it enters the underside of the conveyor [4], where it is rolled under pressure by a pressure board [7]. A curling mat is an alternative to the curling chain. Such a pressure board [7] may be raised or lowered from the underside of the conveyor [4] by means of bell crank linkages [8]. Blades [9] that can be raised through pressure board [7], are used to cut the dough into smaller portions as the dough piece [6] passes over them.

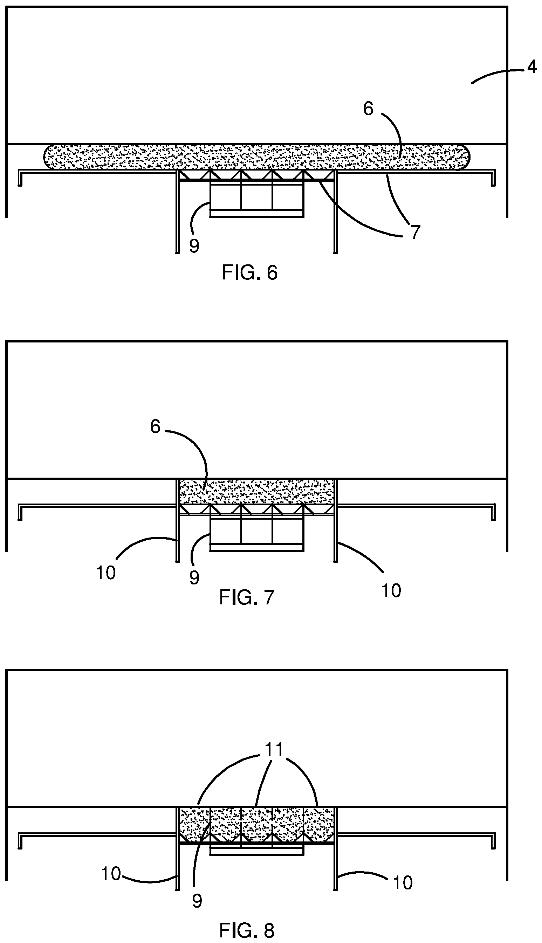

Figure 6 [VIEW C] illustrates the bottom of the conveyor [4] as viewed from the front of the machine. Pressure board [7] is shown set up with a dough piece [6] for product such as a French stick loaf. This is the typical use of such a bread moulder, and many brand machines of this type are used worldwide.

Figure 7 [View C] illustrates a set of loaf length guides [10], that raise through the pressure board [7], and close to within approx 1mm of the conveyor [4]. This permits the dough piece [6] to be contained within a confinement region of a set length, and the improves shape and tightness of the joint or seam in the dough piece. Where products such as Vienna or tinned loaves are produced, these guides [10] make final finishing easier as the dough piece is shaped uniformly.

Figure 8 [View C] illustrates the use of both the loaf guides [10] and the cutting blades [9], that cut the dough piece into 5 equal portions [11] for round bread rolls.

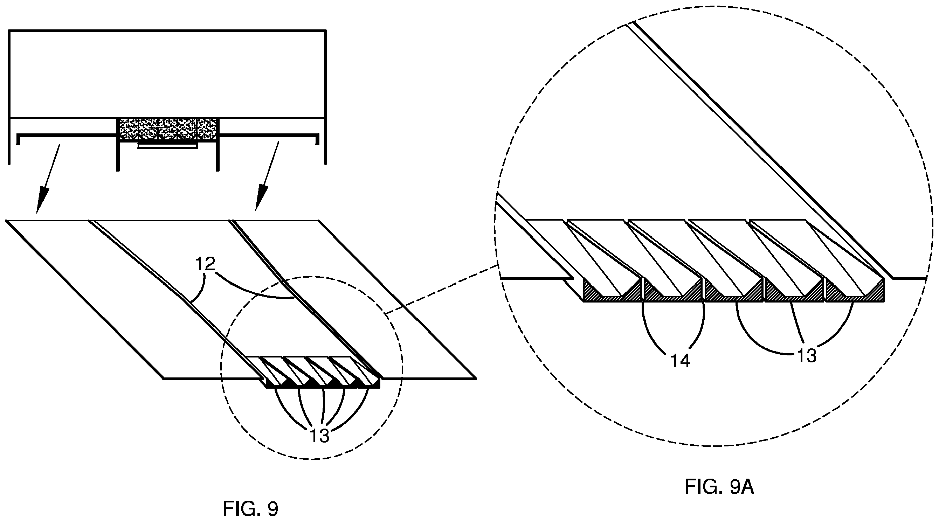

Figure 9 illustrates the pressure board [7], with slots [12] for loaf guides [10] running from front to rear. The lower section of the pressure board [7] is provided with formed channels or troughs [13] located at the end of the pressure board [7]. The lower section is also provided with slots [14] between the troughs or channels [13] along the wall between the troughs to permit blades [9] to pass through. It can be seen that the troughs [13] are provided with bevels which taper towards the end of the trough as the floor of the trough diverges from the plane of the pressure board.

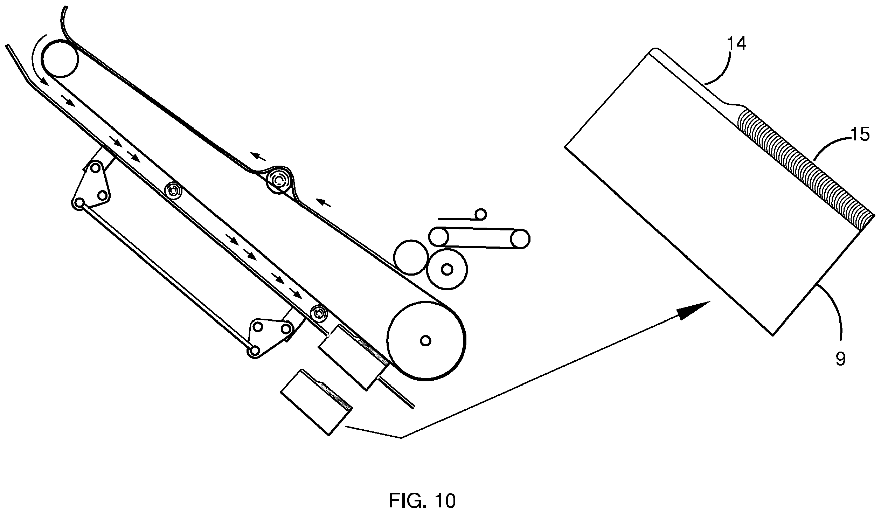

Figure 10 illustrates a blade [9] used in the invention, although this shape can change without effecting the embodiment of the invention. Details of the blade design may be important, as the leading edge [14] begins the process of forming the dough ends prior to cutting through cleanly using sharpened edge [15]. Leading edge [14] has a 1.5mm radius curve finish, rather than a cutting edge for this purpose. The purpose of these surfaces is to work in relationship with the formed sections [13] to both cut and roll the ends of the dough piece around as it passes through the trough, leaving only a small cut surface unsealed.

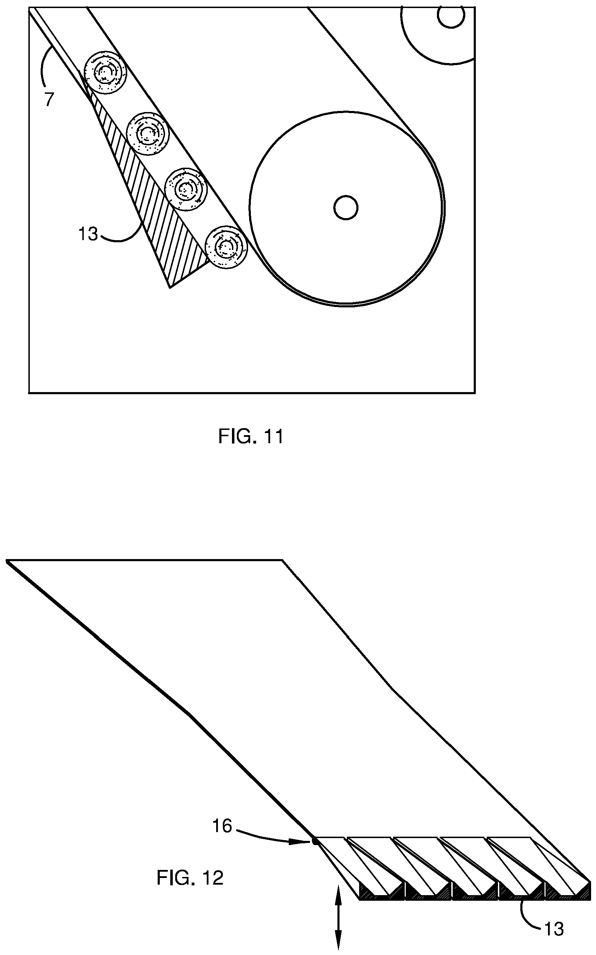

Figure 11 illustrates in side view, how the formed channels or troughs [13], do not interfere with the dough pieces unless the blades [9] are in position in slots [14] because the troughs [13] are set below the level on plane of pressure board [7]. The sharp upper edges of the formed sections [13] permit the other dough pieces to pass over undamaged.

Figure 12 illustrates an option to automatically raise and lower the formed sections [13], by hinging the sections at point [16] so that formed sections [13] lower by mechanical linkage, as blades [9] are lowered.

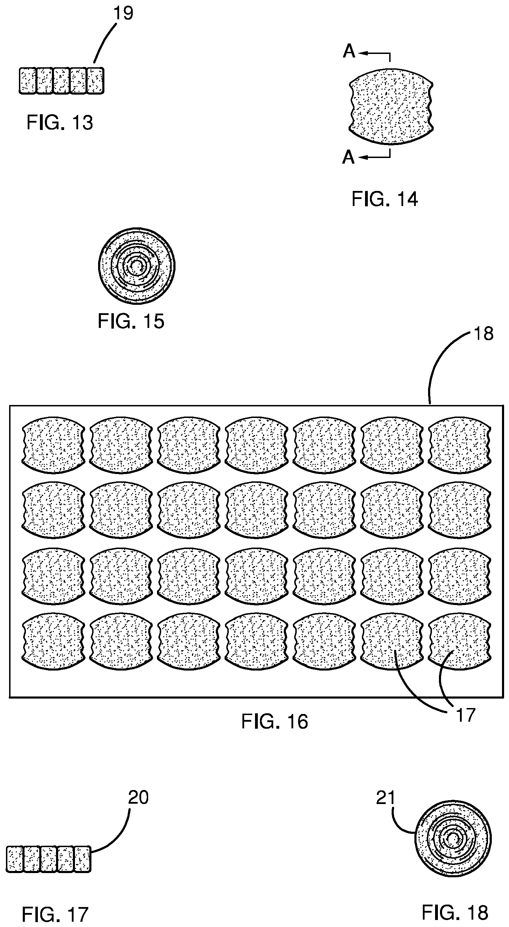

Figure 13 illustrates the round roll portions 19 resulting from the dough piece [6] being fed into the sheeting rollers [3] sideways as illustrated in Figure 4. This permits the dough piece to be less 'worked'. When the round roll portions [19] exit, they are rounded sufficiently to be batch packed [17] onto baking trays [18] as illustrated in Figure 16, where the final proving and baking allow the rolls to join at the cut sections, leaving no visual signs on the baked product. A cross section of a dough piece A-A shown in Figure 15, indicates a curled texture, that causes the roll portions to have thinner crust, better quality, and generally better fresh keeping qualities.

Figure 15 illustrates the roll shaped portions 20 resulting from the dough piece [6] being fed into the sheeting rollers [3] lengthways as illustrated in Figure 3. This creates many laminations in the dough piece, as the sheeting rollers [3] are generally set closer together for this process. The dough pieces are more 'worked' when divided and shaped, so the roll shaped portions [20] illustrated in Figure 17 are less rounded, and are generally larger in diameter and thinner. These portions [20] are laid flat on a cut side, with the other cut side facing upwards. The dough is more worked and as a consequence has a resilient texture as illustrated on Figure 18 and is more able to hold toppings. These are then the ideal shape for rolls that are topped with seeds, cheese, etc, as the flat cut top holds the ingredients, while the texture inside the piece [21] creates a better product being 'cross grained', a process common when manufacturing breads expected to be long lasting, and of excellent fine texture.

The advantages of this process and invention, are many but includes reduced capital costs for machinery, as the bread moulder also produces round rolls. The expertise required to produce the products is reduced, as the process is very simple, and can work on a huge range of dough types and dough formulations. The space and cleaning issues are reduced as the machine has few parts that need cleaning. The maintenance and cost of repairs are low, as the components used are simple in their operation. The ability of the process to produce two types of rolls, each with outstanding advantages in texture, without the complication of changing of machine components or settings makes production ideal for a variety of roll types and products.

It will be understood that the invention disclosed in this specification extends to all alternative combinations of two or more of the individual features mentioned or evident from the text or drawings and all of these different combinations constitute various alternative aspects of the invention as defined by the claims. It will be understood that the present invention has been described above purely by way of example, and modification of detail can be made within the scope of the invention as defined by the claims.

## Claims

1. A pressure rolling board (7) for use in a dough or bread moulder of the type including a dough conveyor operable to receive a strip of dough, the dough conveyor having a first run for cooperating with a curling element to curl or roll the dough strip into a dough piece and a second run operable with a pressure rolling board to mould the dough piece, the pressure rolling board (7) comprising:
an upper section and a lower section, the lower section including a plurality of formed troughs or channels, and blade slots between each of the formed channels or troughs;
a plurality of longitudinally extending grid slots adapted to receive grid plates to define a confinement region for containing the dough piece,
the blade slots being positioned along an upper edge of a wall of each channel or trough and being adapted to receive blades (9) which subdivide the confinement region between the guide plates to cut and divide the dough passing through the confinement region;
wherein a floor of each channel or trough (13) progressively diverges from the plane of the pressure rolling board and is provided with shaped edges or bevels to round the edges of the individual dough piece as it passes along the channel or trough.

2. The pressure rolling board (7) of claim 1 wherein the shaped edges or bevels and floor of the channel or trough are shaped so that the cross sectional area of the divided space between the pressure rolling board and the second run of the conveyor remains substantially unchanged.

3. The pressure rolling board (7) of claim 1 wherein the shaping of the edges or bevels provides a substantially constant cross sectional area across the diameter of the dough piece as it progressed down the channel or trough (13).

4. The pressure rolling board (7) in any one of claims 1 to 3 wherein an upper edge of the wall of each channel or trough is in the same plane as the upper section of the pressure rolling board (7), so that if the blades (9) are not inserted into the slots the dough is able to roll past the lower section of the pressure rolling board (7) along the upper edges of the wall without being affected by the channels in the lower section of the pressure rolling board (7).

5. The pressure rolling board (7) of any one of claims 1 to 4 wherein the lower section of the pressure rolling board (7) is hinged to enable the channels or troughs (13) to be raised when the blades (9) are inserted in the blade slots such that pressure can be applied to the dough pieces when in the channels or troughs (13).

6. A dough moulder comprising a pressure rolling board according to any of the preceding claims, and said dough conveyor (4), said dough conveyor being operable to receive a strip of dough, the conveyor (4) having a first run operable to co-operate with a curling element to curl or roll the dough strip into a dough piece and a second run operable with the pressure rolling board to mould the dough piece.

## Patentansprüche

1. Druckrollplatte (7) zur Verwendung in einer Teig-oder Brotformmaschine des Typs, der einen Teigförderer umfasst, der einen Teigstreifen aufnehmen kann, wobei der Teigförderer Folgendes aufweist: einen ersten Lauf zum Zusammenwirken mit einem Einrollelement, um den Teigstreifen zu einem Teigstück einzurollen oder zu rollen, und einen zweiten Lauf, der dafür ausgelegt ist, das Teigstück mit einer Druckrollplatte zu formen, wobei die Druckrollplatte (7) Folgendes umfasst:
einen oberen Abschnitt und einen unteren Abschnitt, wobei der untere Abschnitt mehrere geformte Mulden oder Kanäle und Schaufelschlitze zwischen jedem der geformten Kanäle oder Mulden umfasst;
eine Vielzahl von sich in Längsrichtung erstreckenden Gitterschlitzen, die dafür ausgelegt sind, Gitterplatten aufzunehmen, um einen Begrenzungsbereich zum Aufnehmen des Teigstücks zu definieren,
wobei die Klingenschlitze entlang einer oberen Kante einer Wand jedes Kanals oder jeder Mulde angeordnet sind und dafür ausgelegt sind, Klingen (9) aufzunehmen, die den Begrenzungsbereich zwischen den Führungsplatten unterteilen, um den Teig, der durch den Begrenzungsbereich läuft, zu schneiden und zu teilen;
wobei ein Boden jedes Kanals oder jeder Mulde (13) fortschreitend von der Ebene der Druckrollplatte und der Ebene abweicht und mit geformten Kanten oder Abschrägungen versehen ist, um die Kanten des einzelnen Teigstücks zu runden, wenn es entlang des Kanals oder der Mulde läuft.

2. Druckrollplatte (7) nach Anspruch 1, wobei die geformten Kanten oder Abschrägungen und der Boden des Kanals oder der Mulde so geformt sind, dass die Querschnittsfläche des unterteilten Raums zwischen der Druckrollplatte und dem zweiten Lauf des Förderers im Wesentlichen unverändert bleibt.

3. Druckrollplatte (7) nach Anspruch 1, wobei die Formgebung der Kanten oder Abschrägungen eine im Wesentlichen konstante Querschnittsfläche über den Durchmesser des Teigstücks bereitstellt, wenn es den Kanal oder die Mulde (13) hinunter befördert wird.

4. Druckrollplatte (7) nach einem der Ansprüche 1 bis 3, wobei eine obere Kante der Wand jedes Kanals oder jeder Mulde in der gleichen Ebene wie der obere Abschnitt der Druckrollplatte (7) so angeordnet ist, dass, wenn die Klingen (9) nicht in die Schlitze eingeführt sind, der Teig an den oberen Rändern der Wand an dem unteren Abschnitt der Druckrollplatte (7) entlang rollen kann, ohne von den Kanälen im unteren Bereich der Druckrollplatte (7) beeinflusst zu werden.

5. Druckrollplatte (7) nach einem der Ansprüche 1 bis 4, wobei der untere Abschnitt der Druckrollplatte (7) angelenkt ist, damit die Kanäle oder Mulden (13) angehoben werden können, wenn die Klingen (9) in die Klingenschlitze eingeführt werden, so dass Druck auf die Teigstücke ausgeübt werden kann, wenn sie sich in den Kanälen oder Mulden (13) befinden.

6. Teigformer, der eine Druckrollplatte nach einem der vorhergehenden Ansprüche und den genannten Teigförderer (4) umfasst, wobei der genannte Teigförderer so betrieben werden kann, dass er einen Teigstreifen aufnimmt, wobei der Förderer (4) einen ersten Lauf aufweist, der mit einem Rollelement zusammenwirken kann, um den Teigstreifen zu einem Teigstück einzurollen oder zu rollen, und einen zweiten Lauf, der dafür ausgelegt ist, das Teigstück mit der Druckrollplatte zu formen.

## Revendications

1. Planche de roulage par pression (7) à des fins d'utilisation dans une façonneuse à pâte ou à pain du type comprenant un convoyeur de pâte servant à recevoir une bande de pâte, le convoyeur de pâte ayant un premier trajet à des fins de coopération avec un élément de façonnage en spirale à des fins de façonnage en spirale ou en petits pains de la bande de pâte pour obtenir un pâton de pâte et un deuxième trajet fonctionnant avec une planche de roulage par pression pour mouler les pâtons de pâte, la planche de roulage par pression (7) comportant :
une section supérieure et une section inférieure, la section inférieure comprenant une pluralité de creux ou profilés en U à forme, et des fentes de lame entre chacun des profilés en U ou creux à forme ;
une pluralité de fentes formant grilles s'étendant dans le sens longitudinal adaptées pour recevoir des plaques de grilles pour définir une région de confinement pour contenir les pâtons de pâte,
les fentes de lame étant positionnées le long d'un bord supérieur d'une paroi de chaque profilé en U ou creux et étant adaptées pour recevoir des lames (9) qui subdivisent la région de confinement entre les plaques de guidage pour couper et diviser la pâte qui passe au travers de la région de confinement ;
dans laquelle un fond de chaque profilé en U ou creux (13) va progressivement en divergeant depuis le plan de la planche de roulage par pression et comporte des bords ou biseaux à forme pour arrondir les bords du pâton de pâte individuel quand il passe le long du profilé en U ou creux.

2. Planche de roulage par pression (7) selon la revendication 1, dans laquelle les bords ou biseaux à forme et le fond du profilé en U ou creux sont formés de telle sorte que la zone transversale de l'espace divisé entre la planche de roulage par pression et le deuxième trajet du convoyeur reste sensiblement inchangée.

3. Planche de roulage par pression (7) selon la revendication 1, dans laquelle la mise en forme des bords ou biseaux procure une zone transversale sensiblement constante en travers du diamètre du pâton de pâte alors qu'il progresse dans le profilé en U ou creux (13).

4. Planche de roulage par pression (7) selon l'une quelconque des revendications 1 à 3, dans laquelle un bord supérieur de la paroi de chaque profilé en U ou creux est dans le même plan que la section supérieure de la planche de roulage par pression (7), de telle sorte que, si les lames (9) ne sont pas insérées dans les fentes, la pâte est en mesure de rouler au-delà de la section inférieure de la planche de roulage par pression (7) le long des bords supérieurs de la paroi sans être affectée par les profilés en U dans la section inférieure de la planche de roulage par pression (7).

5. Planche de roulage par pression (7) selon l'une quelconque des revendications 1 à 4, dans laquelle la section inférieure de la planche de roulage par pression (7) est articulée pour permettre aux profilés en U ou creux (13) d'être relevés quand les lames (9) sont insérées dans les fentes de lame de telle sorte qu'une pression peut être appliquée sur les pâtons de pâte quand ils sont dans les profilés en U ou creux (13).

6. Façonneuse à pâte comportant une planche de roulage par pression selon l'une quelconque des revendications précédentes, et ledit convoyeur de pâte (4), ledit convoyeur de pâte servant à recevoir une bande de pâte, le convoyeur (4) ayant un premier trajet servant à des fins de coopération avec un élément de façonnage en spirale à des fins de façonnage en spirale ou en petits pains de la bande de pâte pour obtenir un pâton de pâte et un deuxième trajet fonctionnant avec la planche de roulage par pression pour mouler les pâtons de pâte.
